# EUROPEAN PATENT SPECIFICATION

(11) **EP 1 695 427 B1**
(45) Date of publication and mention of the grant of the patent: **30.03.2011**
(21) Application number: 04798746.6
(22) Date of filing: 22.11.2004
(51) Int. Cl.: H02K 1/00

(54) **ELECTRIC DISK MOTOR/GENERATOR HAVING A CAST ARMATURE WINDING**
ELEKTRISCHER SCHEIBENMOTOR-GENERATOR MIT EINER GUSSARMATURWICKLUNG
ARMATURE POUR UN GENERATEUR/MOTEUR DISQUE AVEC UN ENROULEMENT D'INDUIT MOULE

(30) Priority: 24.11.2003 HU 0303786
(43) Date of publication of application: 30.08.2006
(73) Proprietor: Dutkay, György, 8000 Székesfehérvar (HU)
(72) Inventor: Dutkay, György, 8000 Székesfehérvar (HU)
(74) Representative: Szabo, Zsolt
(86) International application number: PCT/HU2004/000108
(87) International publication number: WO 2005/050815

(56) References cited:
- EP-A- 0 429 729
- US-A- 4 268 772

## Description

The main property of general structured rotating electric machines is that both the stator and the armature contain electric coils, or in case of a permanent magnet machine at least one of them has them. The electric coil is generally an isolated wire made of copper and the coating is made of polyamide, polyester or other low heat resisting material compared to copper. Consequently, the failure cause in most cases is the burning down of winding after overcharging by power or the working temperature passes over the allowed limit relating to the isolation of the coil.

This limit is much lower than the allowed temperature for any other part of the electric machine. In short, mainly the coil failures limit the electric machine's chargeability and the draw-off of more mechanical power. The other weakest point of the electric machines having commutator is itself the commutator and the brush connecting to it because its mechanical, electrical and heat chargeability are even lower than that of the coils.

The heat chargeability for the electric machine can be a very narrow limit if the environmental temperature is high, for instance, when the electric machines, like a starter, a generator, ventilators work in the engine's room of an automotive, or generally speaking when they are hot working machines.

The application field of electric machines having commutator is limited because of the losses coming from the continuous magnetizing and remagnetizing of the core depending on RPM. These losses do not simply diminish the performance but heat the whole machine with the coil.

Partly to avoid these disadvantages, partly to obtain a more adventurous form aiming at the specific requirement, there is known numerous solutions. The US. Pat. 4,072,874 for instance uses multi pole permanent magnet positioned in ring shape coaxially to the main shaft for direct drive turn-table. This solution has a disk shaped armature containing glued wiring embedded into insulating material. The winding is concentric with the shaft, so the current in the winding is perpendicular to the magnetic field producing torque. This construction can be considered traditional, but the disk shaped armature having larger inertia diminish the fluctuation of the angular velocity, so it is more adventurous for tum-table driving than the previous ones. Similarly the US. Pat. 5,789,841 discloses a ring shaped form arranged permanent magnet motor having disk armature with 3-phase winding, but the phase windings are not made of insulating wire. Instead, the coil is made of copper sheet welded in accordance with the needed current path. This solution is hopelessly difficult regarding the manufacturing, but it is a valuable example for demonstrating that it is not absolutely needed to make the coils of insulated conductors, that is to say no absolutely limit is the heat chargeability of insulating.

Very similar armature is used at the ServoDisk of Kollmorgen Co. (Kollmorgen Motion Technologies Group, Commack, NY., 1-800-77 servo folder). The armature of this product does not contain any iron, so no iron loss occurs, but the armature disk is cut from copper sheet as segments that are welded on the circumference. The width of the welded disk increases the magnetic flux path length in air and the magnetic resistivity becomes large. Consequently, this kind of electric motor is not available for large power range, but due to the very low inertia of the armature, it is very useful for quick respond driving.

To avoid the iron losses not only the ironless armature is suitable, but other kind of machines as well which however contain iron, but the armature does not need to magnetize and demagnetize permanently. This type of machines are the homopolar machines for both motor or alternator (generator) usage. Its common essence can derivate from the Faraday-disk motor in which the interaction of the axial magnetic flux related to the disk shaft and the radial current produce torque on the shaft. The most part of the traditional electric machine works inversely to this principle using radial magnetic flux and axial direction current. The homopolar machine can be excited by permanent or electric magnet supplied with DC, even more it can be AC supplied if the temporary current direction is permanent relative to the magnetic flux direction. Obviously, for the axial air gap machine it is mostly appropriate that the radial current's direction is, for instance, from the centerline towards the circumference or inversely, but only in one of said directions depending on the needed rotation's direction. It is practical to lead in and out the current through the shaft. This is solved by the US. Pat. 5,241,232 with two disk armatures rotating in the same direction so that the current path is from the shaft to the one disk circumference, from the circumference to the other disk's circumference led the current by conductive belt and from the circumference to the shaft. The common magnetic flux is perpendicular to the disk face but opposite in direction on the disks. For a better conductivity, the disk cores of iron have copper coatings. Likewise, the US. Pat. 5,844,345 uses two disks but rotating opposite directions driving each other by gears in order to duplicate the power or the voltage when used as alternator. The direction of the magnetic flux is the same on both disks.

The US. Pat. 5,977,684 is opposed to the previously detailed. It uses only one disk armature incorporating a toroidal winding for low performance generator, which is usable as DC motor excited with permanent magnet. The limited performance comes from the fact that the toroidal winding made of wire needs large air gap in the magnetic flux path which drastically diminishes the performance and at the same time the parallel branches with the magnetic flux of the winding are only parasitic sources. Production of the toroidal coil is costly and hard to be machinized, so its usage in mass production is exceptional. EP Patent Publication No. 0,429,729 A discloses an electric machine with a disc shaped armature. The armature consists of a winding formed on a soft iron core disc constituted by a strip of insulated dynamo sheet rolled into a spiral. The winding of the armature comprises a series of coils prepared from an electric lead with its own insulation and wound around the iron core disc, either over its surface or in radial grooves cut into the surface of the core disc. U.S. Pat. 4,268,772 describes a laminated electromagnetic core with a double layer winding and a process for fabricating said laminated core with windings. The windings are made of electrically conducting metals cast into tube-like channels within the core. The channels are obtained by assemblying the core from individual apertured laminations. After assemblying said laminations, the inner surfaces of the channels are coated with an insulating material before the conductors are fitted to the channels by means of said casting.

Both the permanent and electric excited homopolar machines are very various regarding on its magnetic flux and electric current path however it is very common that its armature's or stator's winding is made of isolated copper wire. Hence on one hand its working temperature is limited; on the other hand the coil branches parallel with magnetic flux are unutilized like baskets, indeed vesting of energy and material. Making and assembly of electric coils by traditional way is less productive, skill needed and costly working process.

The present invention aims to implement surprisingly new design and process way of the electric motor so as the armature's winding can be produced by cheap metal molding, and the isolation of this winding can be similarly heat resistive as other parts of the electric machine.

To this end, the present invention provides an armature for electric disc motors/generators in accordance with Claim 1.

In particular, the above aimed electric machine design is carried out in a totally different form compared to the traditional construction. The main point of our design idea is that the disk shaped armature made of ferromagnetic material situates in a disk shaped permanent magnet's flux field. The orientation of the magnets is the same on both half faces of the armature and on one face of the armature the current runs from the shaft toward the circumference, and back (i.e. from the circumference toward the shaft) on the other face of the same armature. This kind of armature path is obtained by having radial grooves separated from each other on both faces of the disk armature and on the groove-end, close to the shaft, there is a through hole to EP Patent Publication No. 0,429,729 A discloses an electric machine with a disc shaped armature. The armature consists of a winding formed on a soft iron core disc constituted by a strip of insulated dynamo sheet rolled into a spiral. The winding of the armature comprises a series of coils prepared from an electric lead with its own insulation and wound around the iron core disc, either over its surface or in radial grooves cut into the surface of the core disc. U.S. Pat. 4,268,772 describes a laminated electromagnetic core with a double layer winding and a process for fabricating said laminated core with windings. The windings are made of electrically conducting metals cast into tube-like channels within the core. The channels are obtained by assemblying the core from individual apertured laminations. After assemblying said laminations, the inner surfaces of the channels are coated with an insulating material before the conductors are fitted to the channels by means of said casting. the radial groove being on the other face of the disk armature and there is an other through hole from this radial groove to the third radial groove next to the previous one being on the other face of the disk armature. This pattern is repeated until each groove becomes connected to the one situated on the other face and to the next one on same side. This serial pattern results in a network that is then covered with electrically insulating and heat resistive material, for instance with ceramic layer and filled with a conductive material resulting, hence, the electric network in the armature winding. This winding forms a ring, after interrupting it wherever the winding has connect-in and -out, and thus the armature winding is ready both mechanically and electrically.

In order that the invention can be fully understood, alternative designs will be described, wherein reference will be made to the accompanying drawings. In the drawings:

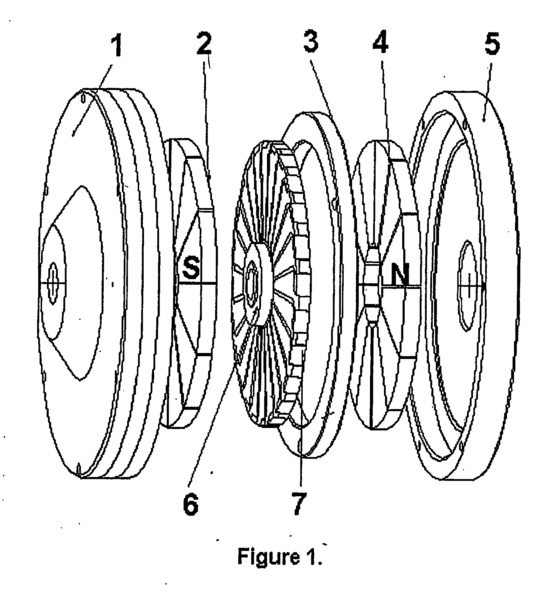

Figure 1 shows the general construction of a motor/ alternator;
Figure 2 shows the iron core of the ferromagnetic armature as prefabricated;

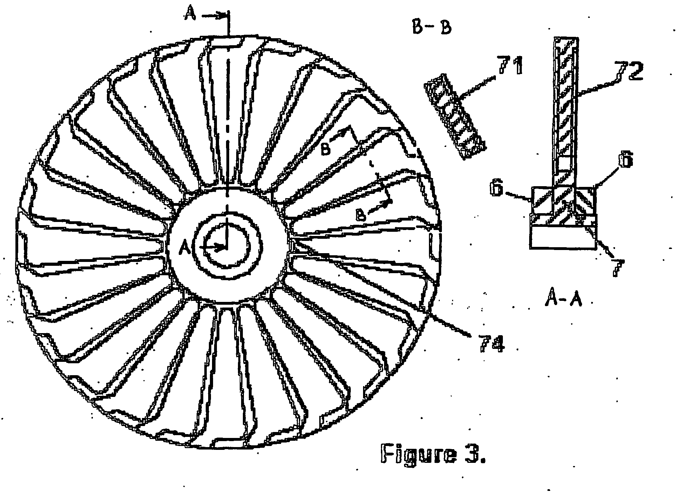

Figure 3 shows the inner structure of the armature;
Figure 4 shows an alternative construction of the ferromagnetic armature as prefabricated.

The examples refer to a DC motor / alternator excited by permanent magnet.

The present invention can be characterized in its execution form of a slipping ring DC motor by the fact that the ferromagnetic disk shaped armature 7 is equipped with slipping rings 6 and is positioned between permanent magnet disks 2 and 4 so that the armature's faces are in face of the same polarity of magnets. The other polarity of the magnets is in face of the ferromagnetic half-housings 1 and 5 and is fixed on them. These half-housings support the not drawn shaft, bearings, brush-holders, brushes, cables, ventilating parts and the mechanically necessary fixing elements. The magnetic path goes starting from the Nordic pole of the right side magnet disk trough the air gap between the magnet disk 4 and the right side face of he disk armature 7, further inside the armature's core, further radial from the armature through the air gap between the armature and the ferromagnetic ring 3 and to the half-housing 5 and ends on the South pole of the magnet disk 4. The magnetic path starting from the Nordic pole of the magnet disk 2 is symmetric to the previously detailed path.

The path of the electric current on the armature is dictated by the patterns on the disk armature face. The pattern characterized by the radial grooves 74 and 75 further the axial holes 76 and 78 covered on their walls with electric insulation and heat resistive material, like ceramic or enamel. After coating the walls of holes, the pattern is filled with electrically conductive material. The grooves form a continuous chain based on the following range: one of the radial grooves 74 situated on one face of the disk armature continues to the axial hole 78 situated close to the circumference of the disk, this hole continues to the radial groove 75 situated on the other face of the disk and this one goes to the axial hole 76 and to the next radial groove situated next to the previous radial groove 74. This pattern is repeated continuously. It is obvious that after filling this pattern with a conductive material, this conductor forms a coil; this coil conducts the electric current from the slipping ring 6 to the one side radial groove 74, to the axial hole 78, to the other face radial groove 75 and to the axial hole 76 repeatedly to the other side slipping ring 6.

The main property of the armature's current path is that all of the conductor's current situated on one face of armature have the same radial direction, for instance from the center toward the circumference, and the conductors situated on the other face of the disk have an inverse direction. The direction of the magnetic flux on the half faces of the disk is also inverse, thus the torques coming from their interaction is of the same direction, hence, it can be led out by the shaft put in a central hole 79.

Obviously, the disk shape armature can be made of non-ferromagnetic material, for instance austenitic steel. In this case the armature itself is ironless, but the austenitic steel disk armature supports the insulating material and the winding elements mechanically in the same way.

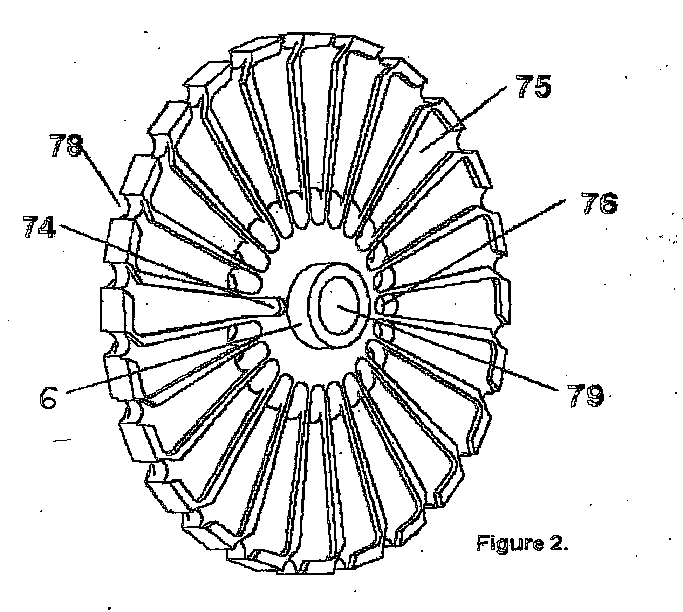

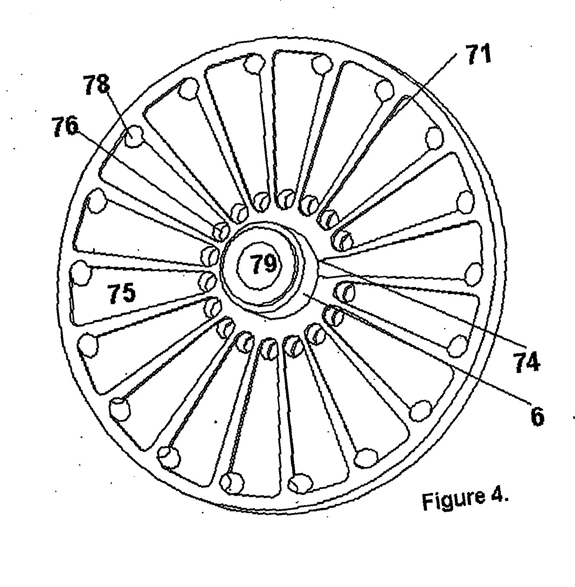

To provide a better understanding of the essence of the invented motor / generator's armature, we present an alternative execution form in Figure 4 compared to the embodiment shown in Figure 2. This figure shows that the radial grooves next to each other are in connection by an oblique hole guided under the rib 71 that separates the radial grooves from each other.

Important item of the present invention is the revolutionary new armature design and its manufacturing process way which is the following: after forming the core of disk armature by machining, casting or forging, the next step is to apply the insulating coating at least to the surfaces of the holes and the grooves or to the whole disk surface. This coating can be a plasma sprayed ceramic, a hard oxidized aluminum, or a simply heat resistive paint layer, for instance, an SE20-M9529-M Silicon One-Coat Paint. After coating the armature's core, we fix the slipping rings on it and fill into the holes and the grooves with a melted conductive material like copper, tin, aluminum or the alloys thereof to form the conductive layer 72. The layer thickness is limited to the rib's 71 height. The slipping rings can be sprayed or cast of copper in same time together with the filling of the holes and the grooves.

Just the same armature connected in short circuit by the two slipping rings can work as an ordinary short circuited armature in a three-phase AC motor.

For a law performance motor/generator of at most 500 Watts, ceramic soldering/brazing for example titan-copper alloys can be applied as the conductive material. After brazing this alloy to the ferromagnetic armature covered with the insulation like ceramic surface and holes/grooves, we get a three dimensional printed circuit that is the armature's coil located on the insulation-coated ferromagnetic armature's core. This conductive layer covered by a second insulating layer can support a second conductive layer forming a second coil fixed to each other.

The second or third layer coils can be totally different for different purposes compared to the premier one, but they work in the same magnetic flux field.

The electric machine by the present invention is not limited only to permanent magnet and AC current circumstances. Replacing the permanent magnets by AC or DC electric ones and supplying the armature winding with the same type of current, the electric machine works.

The present invention does not only do the fundament for a cheaper and more simply electric motor production, but opens a new way for such application field in which the traditional electric motors failed. Such field is for instance the one for automotive electric subassemblies like starters, generators, and others. These parts could not be integrated into the engine so far because of partly heat, partly oil contamination problems. The newly designed electric machine and its armature can bear these effects, because its ceramic or enamel insulation withstands to some hundreds centigrade hot, even in oil.

The armature based on the present invention is significantly firmer mechanically than the traditional ones, thus it can replace on other occasions needed parts also working as armature and takes the possibility working as integrated parts in other role. Characteristically, such a part is the flywheel of internal combustion machines. Using this new type of armature, it works as cranking machine during the starting period, and after this as flywheel and generator. Similarly it can be integrated as impeller for fluid transportation having turbine blades on its circumference supplied with sealing surfaces, and more others.

The greatest advantage of the rotating electric machine designed on basis of the present invention is that its electric circuit, including also the slipping rings, forms one monolithic solid, cast in one solid, contains no joints that can loose. Hence, this kind of electric motor is more reliable compared to the previous ones that are assembled mechanically by means of welding, brazing or soldering.

## Claims

1. An armature for a disk motor/generator comprising
- a disc shaped armature core (7) made of metallic material, said armature core (7) comprising first and second faces and a shaft hole (79) for receiving a shaft;
- first radial grooves (74) separated from each other and extending radially on said first face;
- second radial grooves (75) separated from each other and extending radially on said second face, ***characterized in* that** it further comprises
- first through holes (76) in said armature core (7), formed radially inwardly from the first and second grooves (74, 75), each first through hole (76) communicating with one of the first and one of the second grooves (74, 75);
- second holes (78) in said armature core (7), formed radially outwardly from the first through holes (76), each second hole (78) communicating with one of the first and one of the second grooves (74, 75), wherein each first through hole (76) communicates through the corresponding first radial groove (74) and the corresponding second hole (78) with two adjacent second radial grooves (75) so as to provide a 3D pattern of said grooves (74, 75) and holes (76, 78) to form a continuous network in the armature core (7);
- an electrically insulating and heat-resisting material covering at least and bound to said grooves (74, 75) and holes (76, 78), thereby forming a continuous insulation upon said network; and
- a conducting material filled into said grooves (74, 75) and holes (76, 78), thereby forming a continuous armature winding of said armature core (7).

2. The armature according to Claim 1, ***characterized in* that** the conducting material is filled into said grooves (74, 75) and holes (76, 78) by means of casting, spraying, brazing or soldering.

3. The armature according to Claim 1 or 2, ***characterized in* that** the second holes (78) are formed as through holes in bulk of said armature core (7).

4. The armature according to Claim 1 or 2, ***characterized in* that** the second holes (78) are formed as grooves in circumferential portion of said armature core (7).

5. The armature according to any of Claims 1 to 4, ***characterized in* that** the melting point of the material of the insulation is higher than that of the substance used for the formation of the conducting material.

6. The armature according to any of Claims 1 to 5, ***characterized in* that** the insulation comprises ceramic, enamel, oxidized aluminum or heat resistive paint.

7. The armature according to any of Claims 1 to 5*,* ***characterized in* that** the substance used for the formation of the conducting material of the winding comprises aluminum, copper, tin or an alloy thereof, or a titanium-copper alloy.

8. The armature according to any of Claims 1 to 7, ***characterized in* that** the material of the core (7) is ferromagnetic.

9. The armature according to any of Claims 1 to 7, ***characterized in* that** the material of the core (7) is non-ferromagnetic.

10. The armature according to any of the preceding Claims, ***characterized in* that** the armature has a multilayered winding structure consisting of alternating layers of the insulating material and the conducting material, wherein the consecutive layers are firmly bound together by heat treatment.

11. The armature according to any of the preceding Claims, ***characterized in* that** its circumferential portion is formed into or provided with wheel blades for fluid or gas transport.

12. An electric disc motor comprising the armature according to any of Claims 1 to 11.

13. A generator comprising the armature according to any of Claims 1 to 11.

14. An internal combustion engine comprising a flywheel in the form of the armature according to any of Claims 1 to 11.

15. Use of the armature according to any of Claims 1 to 11 in an internal combustion engine for being operated as a starter motor armature in the cranking period and as a flywheel and/or a generator armature later.

## Patentansprüche

1. Anker für einen Scheibenmotor/-generator, umfassend:
- einen scheibenförmigen Ankerkern (7) aus metallischem Material, wobei der Ankerkern (7) eine erste und zweite Seitenfläche und eine Wellenloch (79) zur Aufnahme einer Welle umfasst;
- erste Radialnuten (74), die voneinander getrennt sind und sich radial auf der ersten Seitenfläche erstrecken;
- zweite Radialnuten (75), die voneinander getrennt sind und sich radial auf der zweiten Seitenfläche erstrecken, **dadurch gekennzeichnet, dass** er ferner umfasst:
- erste Durchgangslöcher (76) im Ankerkern (7), die radial nach innen zu den ersten und zweiten Nuten (74, 75) ausgebildet sind, wobei jedes erste Durchgangsloch (76) mit einer der ersten und einer der zweiten Nuten (74, 75) in Verbindung steht;
- zweite Löcher (78) im Ankerkern (7), die radial nach außen zu den ersten Durchgangslöchern (76) ausgebildet sind, wobei jedes zweite Loch (78) mit einer der ersten und einer der zweiten Nuten (74, 75) in Verbindung steht, wobei jedes erste Durchgangsloch (76) durch die entsprechende erste Radialnut (74) und das entsprechende zweite Loch (78) mit zwei benachbarten zweiten Radialnuten (75) derart in Verbindung steht, dass ein dreidimensionales Muster der Nuten (74, 75) und Löcher (76, 78) bereitgestellt wird, um ein durchgehendes Netzwerk im Ankerkern (7) zu bilden;
- ein elektrisch isolierendes und wärmebeständiges Material, das die Nuten (74, 75) und Löcher (76, 78) zumindest bedeckt und daran gebunden ist, wodurch eine durchgehende Isolierung auf dem Netzwerk ausgebildet ist; und
- ein leitendes Material, das in die Nuten (74, 75) und Löcher (76, 78) gefüllt ist, wodurch eine durchgehende Ankerwicklung des Ankerkerns (7) gebildet ist.

2. Anker nach Anspruch 1, **dadurch gekennzeichnet, dass** das leitende Material mittels Gießen, Sprühen, Hart- oder Weichlöten in die Nuten (74, 75) und Löcher (76, 78) gefüllt ist.

3. Anker nach Anspruch 1 oder 2, **dadurch gekennzeichnet, dass** die zweiten Löcher (78) als Durchgangslöcher im Volumen des Ankerkerns (7) ausgebildet sind.

4. Anker nach Anspruch 1 oder 2, **dadurch gekennzeichnet, dass** die zweiten Löcher (78) als Nuten im Umfangsbereich des Ankerkerns (7) ausgebildet sind.

5. Anker nach irgendeinem der Ansprüche 1 bis 4, **dadurch gekennzeichnet, dass** der Schmelzpunkt des Materials der Isolierung höher als der der Substanz ist, die zur Bildung des leitenden Materials verwendet wird.

6. Anker nach irgendeinem der Ansprüche 1 bis 5, **dadurch gekennzeichnet, dass** die Isolierung Keramik, Emaillelack, oxidiertes Aluminium oder wärmebeständigen Lack umfasst.

7. Anker nach irgendeinem der Ansprüche 1 bis 5, **dadurch gekennzeichnet, dass** die zur Bildung des leitenden Materials der Wicklung verwendete Substanz Aluminium, Kupfer, Zinn oder eine Legierung davon oder eine Titan-Kupfer-Legierung umfasst.

8. Anker nach irgendeinem der Ansprüche 1 bis 7, **dadurch gekennzeichnet, dass** das Material des Kerns (7) ferromagnetisch ist.

9. Anker nach irgendeinem der Ansprüche 1 bis 7, **dadurch gekennzeichnet, dass** das Material des Kerns (7) nicht-ferromagnetisch ist.

10. Anker nach irgendeinem der vorangehenden Ansprüche, **dadurch gekennzeichnet, dass** der Anker eine mehrschichtige Wicklungsstruktur aufweist, die aus abwechselnden Schichten des isolierenden Materials und des leitenden Materials besteht, wobei die aufeinanderfolgenden Schichten durch Wärmebehandlung fest verbunden sind.

11. Anker nach irgendeinem der vorangehenden Ansprüche, **dadurch gekennzeichnet, dass** sein Umfangsbereich in Radschaufeln für den Fluid- oder Gastransport geformt oder damit versehen ist.

12. Elektrischer Scheibenmotor umfassend den Anker nach irgendeinem der Ansprüche 1 bis 11.

13. Generator umfassend den Anker nach irgendeinem der Ansprüche 1 bis 11.

14. Brennkraftmaschine umfassend ein Schwungrad in Form des Ankers nach irgendeinem der Ansprüche 1 bis 11.

15. Verwendung des Ankers nach irgendeinem der Ansprüche 1 bis 11 in einer Brennkraftmaschine für den Betrieb als Startermotoranker in der Anlasszeit und als Schwungrad und/oder Generatoranker später.

## Revendications

1. Induit pour un moteur/générateur à disque comprenant
- un noyau d'induit (7) en forme de disque constitué d'un matériau métallique, ledit noyau d'induit (7) comprenant une première et une deuxième faces et un trou d'arbre (79) pour recevoir un arbre ;
- des premières rainures radiales (74) séparées les unes des autres et s'étendant radialement sur ladite première face ;
- des deuxièmes rainures radiales (75) séparées les unes des autres et s'étendant radialement sur ladite deuxième face, **caractérisé en ce qu'**il comprend en outre
- des premiers trous traversants (76) dans ledit noyau d'induit (7), formés radialement à l'intérieur des premières et deuxièmes rainures (74, 75), chaque premier trou traversant (76) communiquant avec l'une des premières et l'une des deuxièmes rainures (74, 75) ;
- des deuxièmes trous (78) dans ledit noyau d'induit (7), formés radialement à l'extérieur des premiers trous traversants (76), chaque deuxième trou (78) communiquant avec l'une des premières et l'une des deuxièmes rainures (74, 75), dans lequel chaque premier trou traversant (76) communique par la première rainure radiale (74) correspondante et le deuxième trou (78) correspondant avec deux deuxièmes rainures radiales (75) adjacentes de manière à créer un motif en 3D desdites rainures (74, 75) et desdits trous (76, 78) pour former un réseau continu dans le noyau d'induit (7) ;
- un matériau d'isolation électrique et résistant à la chaleur recouvrant au moins lesdites rainures (74, 75) et lesdits trous (76, 78) et lié à celles-ci (ceux-ci), formant ainsi une isolation continue sur ledit réseau ; et
- un matériau conducteur rempli dans lesdites rainures (74, 75) et lesdits trous (76, 78), formant ainsi un enroulement d'induit continu dudit noyau d'induit (7).

2. Induit selon la revendication 1, **caractérisé en ce que** le matériau conducteur est rempli dans lesdites rainures (74, 75) et lesdits trous (76, 78) au moyen d'une coulée, d'un spray, d'une brasure ou d'une soudure.

3. Induit selon la revendication 1 ou 2, **caractérisé en ce que** les deuxièmes trous (78) sont formés comme des trous traversants dans la masse dudit noyau d'induit (7).

4. Induit selon la revendication 1 ou 2, **caractérisé en ce que** les deuxièmes trous (78) sont formés comme des rainures dans une partie circonférentielle dudit noyau d'induit (7).

5. Induit selon l'une quelconque des revendications 1 à 4, **caractérisé en ce que** le point de fusion du matériau de l'isolation est supérieur à celui de la substance utilisée pour la formation du matériau conducteur.

6. Induit selon l'une quelconque des revendications 1 à 5, **caractérisé en ce que** l'isolation comprend une céramique, un émail, de l'aluminium oxydé ou une peinture résistante à la chaleur.

7. Induit selon l'une quelconque des revendications 1 à 5, **caractérisé en ce que** la substance utilisée pour la formation du matériau conducteur de l'enroulement comprend de l'aluminium, du cuivre, de l'étain ou un alliage de ceux-ci, ou un alliage de titane-cuivre.

8. Induit selon l'une quelconque des revendications 1 à 7, **caractérisé en ce que** le matériau du noyau (7) est ferromagnétique.

9. Induit selon l'une quelconque des revendications 1 à 7, **caractérisé en ce que** le matériau du noyau (7) est non ferromagnétique.

10. Induit selon l'une quelconque des revendications précédentes, **caractérisé en ce que** l'induit a une structure d'enroulement à couches multiples consistant en des couches alternées du matériau d'isolation et du matériau conducteur, dans lequel les couches consécutives sont fermement liées ensemble par un traitement thermique.

11. Induit selon l'une quelconque des revendications précédentes, **caractérisé en ce que** sa partie circonférentielle est formée dans ou prévue avec des ailettes de roue pour un transport de liquide ou de gaz.

12. Moteur électrique à disque comprenant l'induit selon l'une quelconque des revendications 1 à 11.

13. Générateur comprenant l'induit selon l'une quelconque des revendications 1 à 11.

14. Moteur à combustion interne comprenant un volant sous la forme de l'induit selon l'une quelconque des revendications 1 à 11.

15. Utilisation de l'induit selon l'une quelconque des revendications 1 à 11 dans un moteur à combustion interne pour qu'il soit utilisé comme un induit de moteur de démarreur dans la période de démarrage et comme un volant et/ou un induit de générateur ultérieurement.
